(19) Europäisches Patentamt
European Patent Office
Office européen des brevets

(11) **EP 4 067 974 B1**

(12) **EUROPEAN PATENT SPECIFICATION**

(45) Date of publication and mention
of the grant of the patent:
**04.06.2025 Bulletin 2025/23**

(21) Application number: **22164667.2**

(22) Date of filing: **28.03.2022**

(51) International Patent Classification (IPC):
**G02B 27/01** (2006.01)   **F21V 8/00** (2006.01)
**G02B 27/00** (2006.01)

(52) Cooperative Patent Classification (CPC):
**G02B 6/0038; G02B 6/0065; G02B 6/0076;**
**G02B 27/0081; G02B 27/0172;** G02B 6/0018;
G02B 6/0031; G02B 6/0036

(54) **2D-PUPIL EXPANSION LIGHT GUIDE ASSEMBLY**

2D-PUPILLENEXPANDIERENDE LICHTLEITERANORDNUNG

ENSEMBLE DE GUIDAGE DE LUMIÈRE D'EXPANSION DE PUPILLE 2D

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **29.03.2021 FR 2103209**
**19.11.2021 US 202117531082**

(43) Date of publication of application:
**05.10.2022 Bulletin 2022/40**

(73) Proprietor: **Optinvent**
**35700 Rennes (FR)**

(72) Inventors:
• **JULIEN, Simon**
**35700 RENNES (FR)**
• **SARAYEDDINE, Khaled**
**35700 RENNES (FR)**
• **LIU, Yao**
**35700 RENNES (FR)**
• **MIRZA, Kayvan**
**35700 RENNES (FR)**

(74) Representative: **Cabinet Le Guen Maillet**
**3, impasse de la Vigie**
**CS 71840**
**35418 Saint-Malo Cedex (FR)**

(56) References cited:
WO-A1-2019/151498    JP-A- 2012 053 258
US-A1- 2018 374 266    US-B1- 8 665 178

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Technical domain

The present invention relates to a light guide assembly including two complementary transparent monolithic optical parts having, on their surfaces that face each other when said two optical parts are assembled, several arrays of microstructures to provide guidance, 2D expansion and extraction of image rays.

## Background art

Light guides (or waveguides) can be made of an optical transparent material (plastic, glass, etc.) and be used to transport rays of light by total internal reflection from one zone to another of the light guide. Such a light guide is for example used in augmented reality headsets to enable a user to see a virtual image superimposed on the real world.

Usually a display engine (or collimator system) generates a virtual image at large distance or infinity. The virtual image is in-coupled to the light guide by means of in-coupler optics. Rays of the in-coupled virtual image travel through the light guide by total internal reflection and hit an out-coupler that extracts the light in front of the user eye. The out-coupler includes prism microstructures with a semi-reflective coating on oblique surfaces of the prism microstructures to extract the image rays having the right direction in space and to project the virtual image into the user's eye.

The collimator system is generally made of an image source coupled with lenses and/or mirrors to enlarge a virtual image provided by the image source and collimate said virtual image, generally at infinity focus. The image source could be either LCOS (Liquid Crystal on Silicon), LCD (Liquid Cristal Display), OLED (Organic Light-Emitting Diode), μLED (Micro Light Emitting Diode) or MEMS (Micro opto Electro Mechanical System).

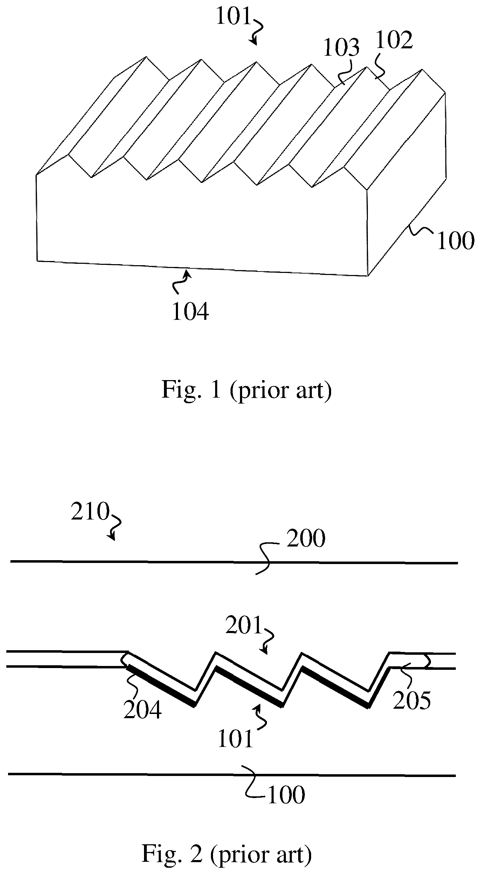

Such an arrangement is disclosed in the US patent 8,433,172, as similarly depicted in Fig. 1. A light guide 100 has an upper surface 101 and a lower surface 104. The upper surface 101 includes a prism array, while the lower surface 104 is flat. Each prism of the prism array is composed of a first surface 102 and a second surface 103 which are oblique with respect to each other and with respect to the lower surface 104. The surfaces 102 of the prisms of the prism array are parallel to each other, and the surfaces 103 of the prisms of the prism array are also parallel to each other. The surfaces 103, on which a semi-reflective coating is applied, are intended to extract the virtual image rays out of the light guide and into the user's eye. No coating is applied on the surfaces 102.

Another arrangement enabling see-through effect is disclosed in the US patent 9,285,590. The see-through effect (or transparency) is permitted by a first light guide part 100 that has a prism array on one 101 of its surfaces, as already shown in Fig. 1, which is covered by a partially-reflective coating applied on all its surfaces. The first light guide part is complemented by a second light guide part 200, referred to as a cover-plate, also having a prism array on one 201 of its surfaces. The prism array of the second light guide part 200 has a complementary shape to the prism array of the first light guide part 100, as illustrated in **Fig. 2.** The two light guide parts 100 and 200 are assembled together with a transparent glue 205 with nearly a constant thickness, such as to form a light guide assembly 210.

The prism arrays described above can be made by a diamond cut process, but are generally manufactured by molding techniques, including injection molding, injection compression molding, hot embossing, resin thermoforming or by using a UV-cured monomer.

The current market trend for smart glasses or head mounted display devices is to have large field of view displays that look like a normal pair of glasses. However, the prism arrays described in the US patent 9,285,590 referenced above are unidimensional and cannot allow injecting images with large field of view, unless it is done with a very thick light guide or with a large sized collimator system. Therefore, it is necessary to provide a thin light guide close to an ophthalmic lens form factor, as well as a small size and lightweight collimator system that can fit within an eyeglass frame temple.

It is thus desirable to provide an optical solution to meet the above requirements, namely having a small sized collimator system with a small exit pupil which is in-coupled to a thin light guide, in order to allow a large field of view and large eye-box. A pupil extension in multiple directions has then to be performed inside the light guide. It is furthermore desirable to provide such an optical solution that is easy to manufacture.

It may be noted that it is known in the art the document US 8,665,178 B1, which discloses a light guide assembly having a first transparent monolithic optical part and a second transparent monolithic optical part with complementary shapes forming a single prism array for extracting light injected in the light guide assembly.

It is further is known in the art the document US 2018/374266 A1, which discloses a planar optical waveguide having a first orthogonal pupil expansion element associated with a first face of the planar optical waveguide for splitting an in-coupled light beam into a first set of orthogonal light beamlets, a second orthogonal pupil expansion (OPE) element associated with a second face of the planar optical waveguide for splitting the in-coupled light beam into a second set of orthogonal light beamlets, and an exit pupil expansion (EPE) element associated with the planar optical waveguide for splitting the first and second sets of orthogonal light beamlets into an array of out-coupled light beamlets that exit the planar optical waveguide.

It is further known in the art the document WO 2019/151498 A1, which discloses an optical guide comprising a first optical element with a first Fresnel shape portion and a second optical element with a second Fresnel shape portion obtained by substantially inverting the shape of the first Fresnel shape portion, the first and second optical elements being so that the first and second Fresnel shape portions and are opposed to each other.

**Summary of the invention**

It is proposed herein a light guide assembly comprising:

- a first transparent monolithic optical part having a refractive index;
- a second transparent monolithic optical part having the same refractive index as the first transparent monolithic optical part;

wherein

- the first transparent monolithic optical part has a first surface having two successive sets composed of one flat surface followed by one prism array, the flat surface of each set has a partially-reflective coating thereon, and the first transparent monolithic optical part further has an opposite second surface that is flat,
- each prism array of the first surface of the first transparent monolithic optical part has at least two prisms, each prism being composed of a first surface and a second surface which are oblique with respect to each other and with respect to said opposite second surface of the first transparent monolithic optical part, the first surfaces of the prism arrays have a partially-reflective coating thereon and the second surfaces of the prism arrays have no reflective coating thereon,
- the second transparent monolithic optical part has a first surface having a geometrically complementary shape with respect to the shape of the first surface of the first transparent monolithic optical part, and the second transparent monolithic optical part of the light guide assembly further has an opposite second surface that is flat,
- the first and second transparent monolithic optical parts are assembled together using an optically transparent adhesive material, such that the second surfaces of the first and second transparent monolithic optical parts of the light guide assembly are parallel to each other, the optically transparent adhesive material having the same refractive index as the first and second transparent monolithic optical parts.

Thus, the light guide assembly is an optical solution enabling using a small sized collimator system with a small exit pupil, which allows a large field of view and large eye-box. A pupil extension in multiple directions is performed inside the light guide assembly thanks to the foregoing arrangement, and the light guide assembly is easy to manufacture thanks to the monolithic character of said first transparent monolithic optical parts.

In a particular embodiment, the light guide assembly comprises an in-coupling zone for in-coupling rays of a virtual image.

In a particular embodiment, the light guide assembly is such that:

- the flat surface of the last set in sequence with respect to a global direction of propagation of the rays of the virtual image in the light guide assembly, among said sets, implements a splitting-plus-expansion function with respect to the rays of the virtual image,
- the prism array of said last set in sequence implements a multiplication-plus-extraction function with respect to the rays of the virtual image,
- the flat surface of the other set implements a splitting function with respect to the rays of the virtual image, and
- the prism array of said other set implements a multiplication function with respect to the rays of the virtual image.

In a particular embodiment, for each prism array, the first surfaces of the prisms of the prism array in question are parallel to each other, and the second surfaces of the prisms of the prism array in question are also parallel to each other.

In a particular embodiment, for each prism array, the first surfaces of the prisms of the prism array in question are oblique flat surfaces.

In a particular embodiment, each first surface of the prism array of the last set in sequence is spherical and has a lower inclination by an average angle θ than the potential immediately preceding first surface of said prism array in the succession of prisms according to the global direction of propagation of the rays of the virtual image in the light guide assembly, so as to extract the virtual image at a finite distance D.

In a more particular embodiment, the prism array of the last set in sequence fulfills the following relationships:

$$R = 2 * n * D$$

$$\theta = \arctan ( P / D ) / (2 * n)$$

wherein n is the refractive index of the first transparent monolithic optical part, R is a radius of the first surfaces of the prism array of the last set in sequence, and P is a constant pitch between any successive prisms of the prism array of the last set in sequence.

In a particular embodiment, the prism arrays have different orientations in a x,y plane of a reference direct orthonormal coordinate system of the light guide assembly defining x, y and z directions, and wherein thickness of the light guide assembly lies in the z direction of said reference direct orthonormal coordinate system.

In a particular embodiment, another prism array is placed upstream, with respect to the global direction of propagation of the rays of the virtual image in the light guide assembly, the sets of two successive sets composed of one flat surface followed by one prism array, wherein each prism of said another prism array being composed of a first surface and a second surface which are oblique with respect to each other and with respect to said opposite second surface of the first transparent monolithic optical part, the first surfaces of said another prism array have a partially-reflective coating thereon and the second surfaces of said another prism array have no reflective coating thereon, and wherein said another prism array implements a multiplication function with respect to the rays of the virtual image.

In a particular embodiment, the light guide assembly comprises an in-coupler in a form of an in-coupling prism embedded into the light guide assembly by the complementary shapes of the first and second monolithic transparent optical parts of the light guide assembly.

In a more particular embodiment, the in-coupling prism has a reflective surface on an external surface thereof.

In a particular embodiment, a transparent wedge prism is assembled to the in-coupling prism, the transparent wedge prism has an external surface with a fully-reflective coating or a mirror, wherein the transparent wedge prism is composed of a material selected as a function of:

- a difference of parallelism of an equivalent prism to which the light guide assembly is equivalent when an in-coupled field zero is not perpendicular to the second surfaces of the first and second transparent monolithic optical parts and when an extracted field zero is also not perpendicular to the second surfaces of the first and second transparent monolithic optical parts,
- a difference between a refractive index of the transparent wedge prism with the refractive index of the first and second transparent monolithic optical parts, and
- a difference between an Abbe number between their respective materials.

In a particular embodiment, a vision correction lens is assembled with the light guide assembly to correct user's vision for both the rays of the virtual image which are extracted from light guide assembly and see-through effect rays crossing the light guide assembly.

It is further proposed herein a display module formed by an assembly of the foregoing light guide and a collimator system, wherein the collimator system is arranged with the light guide assembly for projecting a virtual image at infinity and in-coupling rays thereof in the light guide assembly.

It is further proposed herein a head mounted display comprising the foregoing display module configured for right eye vision and/or the foregoing display module configured for left eye vision.

It is further proposed herein a method for manufacturing a light guide assembly, comprising:

- performing a manufacturing process to manufacture a first transparent monolithic optical part having a refractive index and a second transparent monolithic optical part having the same refractive index as the first transparent monolithic optical part;

wherein following the manufacturing process

- the first transparent monolithic optical part has a first surface having two successive sets composed of one flat surface followed by one prism array, and the first transparent monolithic optical part further has an opposite second surface that is flat,
- each prism array of the first surface of the first transparent monolithic optical part has at least two prisms, each prism being composed of a first surface and a second surface which are oblique with respect to each other and with respect to said opposite second surface of the first transparent monolithic optical part,
- the second transparent monolithic optical part has a first surface having a geometrically complementary shape with respect to the shape of the first surface of the first transparent monolithic optical part, and the second transparent monolithic optical part of the light guide assembly further has an opposite second surface that is flat,

wherein the manufacturing process further comprises:

- applying a partially-reflective coating on the flat surface of each set and on the first surfaces of the prism arrays, while the second surfaces of the prism arrays have no reflective coating thereon,
- assembling the first and second transparent monolithic optical parts together using an optically transparent adhesive material, such that the second surfaces of the first and second transparent monolithic optical parts of the light guide assembly are parallel to each other, the optically transparent adhesive material having the same refractive index as the first and second transparent monolithic optical parts.

It is further proposed herein a light guide assembly comprising:

- a first transparent monolithic optical part having a refractive index;
- a second transparent monolithic optical part having the same refractive index as the first transparent monolithic optical part;

wherein

- the first transparent monolithic optical part has a first surface having two successive sets composed of one flat surface followed by one prism array, and the first transparent monolithic optical part further has an opposite second surface that is flat,
- each prism array of the first surface of the first transparent monolithic optical part has at least two prisms, each prism being composed of a first surface and a second surface which are oblique with respect to each other and with respect to said opposite second surface of the first transparent monolithic optical part, the first surfaces of the prism arrays have a partially-reflective coating thereon and the second surfaces of the prism arrays have no reflective coating thereon,
- the second transparent monolithic optical part has a first surface having a geometrically complementary shape with respect to the shape of the first surface of the first transparent monolithic optical part, and the second transparent monolithic optical part of the light guide assembly further has an opposite second surface that is flat,

wherein parts of the first surface of the second transparent monolithic optical part which face the flat surfaces of the sets on the first surface of the first transparent monolithic optical part, have a partially-reflective coating thereon,

- the first and second transparent monolithic optical parts are assembled together using an optically transparent adhesive material, such that the second surfaces of the first and second transparent monolithic optical parts of the light guide assembly are parallel to each other, the optically transparent adhesive material having the same refractive index as the first and second transparent monolithic optical parts.

It is further proposed herein a method for manufacturing a light guide assembly, comprising:

- performing a manufacturing process to manufacture a first transparent monolithic optical part having a refractive index and a second transparent monolithic optical part having the same refractive index as the first transparent monolithic optical part;

wherein following the manufacturing process

- the first transparent monolithic optical part has a first surface having two successive sets composed of one flat surface followed by one prism array, and the first transparent monolithic optical part further has an opposite second surface that is flat,
- each prism array of the first surface of the first transparent monolithic optical part has at least two prisms, each prism being composed of a first surface and a second surface which are oblique with respect to each other and with respect to said opposite second surface of the first transparent monolithic optical part,
- the second transparent monolithic optical part has a first surface having a geometrically complementary shape with respect to the shape of the first surface of the first transparent monolithic optical part, and the second transparent monolithic optical part of the light guide assembly further has an opposite second surface that is flat,

wherein the manufacturing process further comprises:

- applying a partially-reflective coating on the first surfaces of the prism arrays, while the second surfaces of the prism arrays have no reflective coating thereon, and further applying the partially-reflective coating on parts of the first surface of the second transparent monolithic optical part which are intended to face the flat surfaces of the sets on the first surface of the first transparent monolithic optical part,
- assembling the first and second transparent monolithic optical parts together using an optically transparent adhesive material, such that the second surfaces of the first and second transparent monolithic optical parts of the light guide assembly are parallel to each other, the optically transparent adhesive material having the same refractive index as the first and second transparent monolithic optical parts.

**Description of the drawings**

The characteristics of the invention will emerge more clearly from a reading of the following disclosure of at least one embodiment, said disclosure being produced with reference to the accompanying drawings, among which:

Fig. 1 schematically represents a first prior art arrangement;

Fig. 2 schematically represents a second prior art arrangement;

Fig. 3 schematically represents a cross section of a first transparent monolithic optical part of a light guide assembly according to an embodiment of this invention;

Fig. 4 schematically represents a cross section of a second transparent monolithic optical part of the light guide assembly according to an embodiment of this invention;

Fig. 5 schematically represents a cross section of the light guide assembly formed using the first transparent monolithic optical part in Fig. 3 and the second transparent monolithic optical part in Fig. 4;

Fig. 6 schematically represents a top view of an arrangement of I50, O-O, I50' and X-X elements inside the light guide assembly according to an embodiment of this invention;

Fig. 7A and 7B schematically represent perspective views of the arrangement of the I50, O-O, I50' and X-X elements shown in Fig. 6, further showing extraction of rays to form an eye-box;

Fig. 8 schematically represents a perspective view of another arrangement of the I50, O-O, I50' and X-X elements inside the light guide assembly according to an embodiment of this invention;

Fig. 9A and 9B schematically represents top views, as well as a two cross sections, of an arrangement of the I50, O-O, I50' and X-X elements of a light guide assembly embodiment;

Fig. 9C schematically represents a cross section, as in Fig. 9B, where reflections and propagation of rays are shown;

Fig. 10 schematically represents a perspective view of an arrangement with more prism arrays in the light guide assembly according to an embodiment of this invention;

Fig. 11 schematically represents a cross section of an arrangement of an in-coupling zone of the light guide assembly, wherein a position of the I50 element is further shown, according to an embodiment of this invention;

Fig. 12 schematically represents a cross section of another arrangement of the in-coupling area zone of the light guide assembly, according to an embodiment of this invention.

Fig. 13 schematically represents a method for providing the light guide assembly, according to this invention;

Fig. 14 schematically represents a light guide assembly obtained according to method shown in Fig. 13;

Fig. 15 schematically represents a perspective view of an example of display system including the light guide assembly, as well as a collimator system, for further integration into smart glasses or an Augmented Reality (AR) Head Mounted Display (HMD) or head worn display device;

Fig. 16 schematically represents a simplified cross section of the X-X element, in a particular embodiment, wherein orientation of active surfaces of the prism array of the X-X element differs from one prism to another; and

Fig. 17 schematically represents a cross section view of the light guide assembly assembled with an ophthalmic lens located between the light guide assembly and the user's eye to correct the user's vision.

## Description of embodiments

It is an object of this invention to provide a light guide assembly, in which a virtual image is in-coupled and rays thereof are expanded and propagated, and from which said rays are extracted to a predefined eye-box. The light guide assembly is made with first and second transparent monolithic optical parts having the same refractive index, and in which rays of a collimated image are in-coupled. The in-coupled rays of the virtual image propagate inside the light guide assembly by total internal reflection from an in-coupled zone to an out-coupled zone where said rays are extracted from the light guide assembly.

The first transparent monolithic optical part of the light guide assembly has a first surface having two successive sets, wherein each set is composed of one flat surface followed by one prism array. The flat surface of each set has a partially-reflective coating thereon. The first transparent monolithic optical part of the light guide assembly further has a second opposite flat surface.

Each prism array of the first surface of said first transparent monolithic optical part has at least two prisms. Each prism is composed of a first surface and a second surface which are oblique with respect to each other and with respect to said second opposite surface. In one particular embodiment, the first surfaces of the prisms of the prism array in question are parallel to each other, and the second surfaces of the prisms of the prism array in question are also parallel to each other. In one embodiment, the first surfaces of the prisms of the prism array in question are oblique flat surfaces. In other embodiments, the first and second surfaces of the prisms of the prism array in question have other shapes. The first surfaces of the prism arrays have a partially-reflective coating thereon. The second surfaces of the prism arrays have no reflective coating thereon (except some coating residuals due to inaccuracy of the manufacturing process). The first surfaces of the prism arrays are referred to as the active surfaces, since rays hitting said first surfaces are reflected, either for rays expansion or for rays extraction. The second surfaces of the prism arrays are referred to as the passive surfaces, since rays hitting said second surfaces are transmitted via said second surfaces.

The flat surface of the last set in sequence (with respect to the direction of propagation of the virtual image rays in the light guide assembly) among said sets is referred to as the splitting-plus-expansion surface or I50' element, and implements a splitting-plus-expansion function with respect to the rays of the virtual image. The prism array of said last set in sequence is referred to as the multiplication-plus-extraction array or X-X element implements a multiplication-plus-extraction function with respect to the rays of the virtual image. The flat surface of the other set in sequence (i.e., the first set in sequence) among said sets is referred to as the splitting surface or I50 element, and implements a splitting function with respect to the rays of the virtual image. And the prism array of said other set is referred to as the multiplication array or O-O element and implements a multiplication function with respect to the rays of the virtual image.

The second transparent monolithic optical part of the light guide assembly has a first surface having a geometrically complementary shape with respect to the shape of the first surface of the first transparent monolithic optical part of the light guide assembly. The second transparent monolithic optical part of the light guide assembly further has a second opposite flat surface.

The first and second transparent monolithic optical parts of the light guide assembly are assembled together using an optically transparent adhesive material, such as glue, such that the second surfaces of the first and second transparent monolithic optical parts of the light guide assembly are parallel to each other after the assembly. The transparent adhesive material has the same refractive index as the first and second transparent monolithic optical parts of the light guide assembly. The light guide assembly is therefore transparent for ambient rays of the external scene (real world) that are incident on either of the second surfaces of the first and second transparent monolithic optical parts of the light guide assembly.

The in-coupled rays of the virtual image split when hitting the I50 element, thus generating transmitted rays (that are not reflected by the I50 element) and reflected rays (that are reflected by the I50 element). All these rays are guided inside the light guide assembly by total internal reflection between the second surfaces of the first and second transparent monolithic optical parts of the light guide assembly. Said guided rays are reflected by the active surfaces of the O-O element, generating multiple rays having the same direction. These multiple rays then hit the I50' element, thus generating rays reflected by the I50' element in addition to rays transmitted by the I50' element. The resulting rays continue to be guided in the light guide assembly by total internal reflection and eventually hit the X-X element. Some portion (e.g., 15%) of the rays is then reflected, depending on characteristics of the coating applied, and therefore extracted from the light guide assembly by the hit prisms of the X-X element, while some other portion of the rays is transmitted and therefore continues to be guided inside the light guide assembly to be further extracted by other prisms of the X-X element.

The foregoing description applies for any ray bundle that is in-coupled into the light guide assembly. An entry pupil delivers rays of the virtual image to the in-coupled zone (e.g., injection area). Each ray direction represents one field of view. When all rays of all fields of view are emitted from the entry pupil, the rays propagate inside the light guide assembly as described above. The rays extracted out of the light guide assembly by the X-X element represent the extracted field of view, which enables projecting the virtual image through the predefined eye-box.

According to the foregoing description of the ray path inside the light guide assembly, the role of the I50 element is to expand the entry pupil size in an incidence plane of said rays. The role of the O-O element is to expand a beam made of rays coming from the entry pupil and those expanded by the I50 element in several planes parallel to an incident plane of rays incident on active surface of the O-O element. The role of the I50' element is to expand a beam of the rays out of the O-O element in the incidence plane of said rays. Finally, the role of the X-X element is to extract the guided rays out of the light guide assembly.

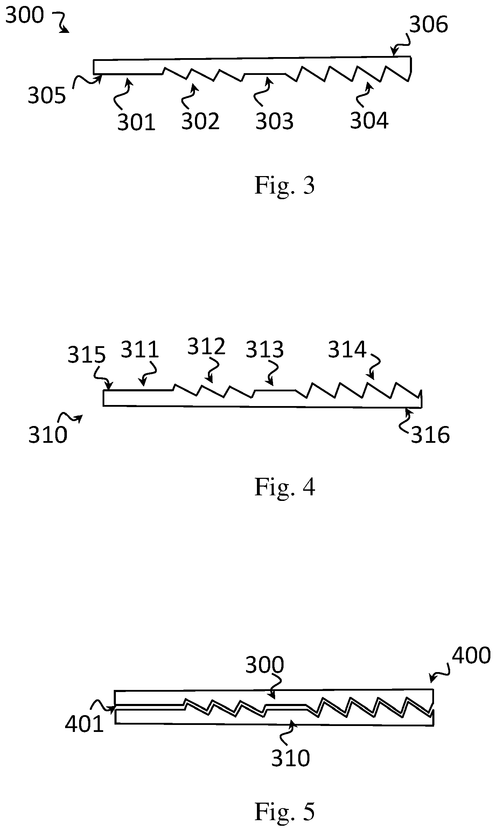

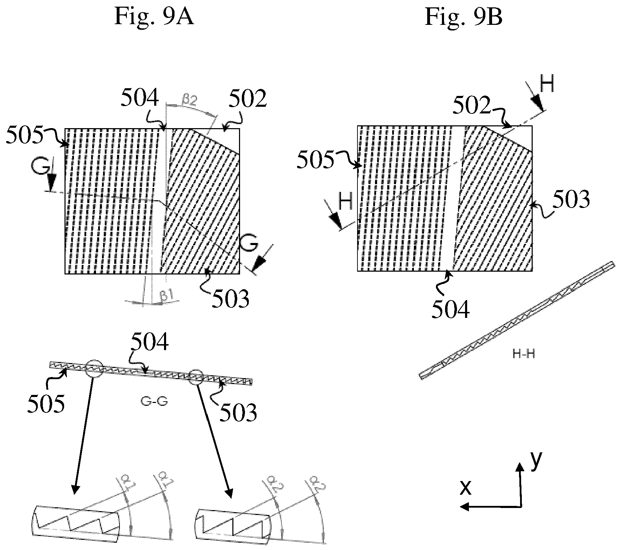

**Fig. 3** schematically shows a cross section of the first transparent monolithic optical part 300 of the light guide assembly. The first surface 305 of the first transparent monolithic optical part 300 of the light guide assembly comprises a first prism array 302 and a second prism array 304. The prism array 302, which forms the O-O element, comprises several prisms, wherein each prism has an active surface and a passive surface. As already described above, the role of said active surfaces is to partially reflect rays due to a partially-reflective coating (typically, dielectric) applied on said active surfaces, while the role of the passive surfaces is to transmit light, since no coating is present on said passive surfaces. The non-null angle between the active surfaces of the prism array 302 of the O-O element and the second (flat) surface 306 of the first transparent monolithic optical part 300 of the light guide assembly is $\alpha 2$ (see Fig. 9A). The prism array 304, which forms the X-X element, comprises several prisms, wherein each prism has an active surface and a passive surface. As already described above, the role of the active surfaces is to partially reflect rays due to the coating applied thereon, while the role of the passive surfaces is to transmit rays, since no coating is present on said passive surfaces. The non-null angle between the active surfaces of the prism array 304 of the X-X element and the second (flat) surface 306 of the first transparent monolithic optical part 300 of the light guide assembly is $\alpha 1$ (see Fig. 9A). The prism array 302 and the prism array 304 have different orientations in a x,y plane of the light guide assembly, wherein the difference in orientation is characterized by a non-null angle β. A reference direct orthonormal coordinate system of the light guide assembly defines x, y and z directions as shown on several figures herewith, wherein the thickness of the light guide assembly lies in the z direction of said reference direct orthonormal coordinate system and wherein the x direction is intended to be substantially parallel to a virtual line crossing the centers of the user's eyes pupils. As represented herein, the non-null angle β can be separated into two complementary signed angles (depending on whether each one is considered clockwise or counterclockwise): a first signed angle β1 (see Fig. 9A), which indicates the orientation of the prism array of the X-X element with respect to the y direction, and a second signed angle β2 (see Fig. 9A), which indicates the orientation of the prism array of the O-O element with respect to the y direction.

The I50 element 301 is a part of the first surface 305 of the first transparent monolithic optical part 300 of the light guide assembly which is parallel to the second surface 306 thereof. Preferably, the distance between the part of said first surface 305 where the I50 element 301 is located and said second surface 306 is substantially equal to half the thickness of the light guide assembly. This distance is not strictly equal to half the thickness of the light guide assembly due to the presence of an adhesive material (as explained hereafter) and further due to potential manufacturing inaccuracy. Moreover, this distance could be different as far as it is coherently defined according to the transmission-reflection ratio of a partially reflected coating applied thereon (see hereafter) so as to completely fill the light guide assembly with necessary field rays.

The I50 element 301 has a partially-reflective coating, preferably with 50% transmission and 50% reflection, so as to split (e.g., equally) the incident rays during propagation inside the light guide assembly. This feature is described in the US patent 9,435,955, which shows how an entry pupil is doubled by such a coating in order to reduce the size of the collimator system and to completely fill the light guide assembly with necessary field rays.

The I50' element 303 is a part of the first surface 305 of the first transparent monolithic optical part 300 of the light guide assembly which is parallel to the second surface 306 thereof. The distance between the part of said first surface 305 where the I50' element 303 is located and said second surface 306 is substantially equal to half the thickness of the light guide assembly. The I50' element 303 has a partially-reflective coating, preferably with 50% transmission and 50% reflection so as to again equally split the incident rays during propagation inside the light guide assembly.

In a variant embodiment, the partially-reflective coating of the I50 element and/or of the I50' element is present on the second transparent monolithic optical part of the light guide assembly instead of being present on the first transparent monolithic optical part 300 of the light guide assembly (which literally means that the I50 element and/or of the I50' element are parts of the second transparent monolithic optical part of the light guide assembly).

In a particular embodiment, the second surface 306 of the first transparent monolithic optical part 300 of the light guide assembly is covered by an anti-reflection coating.

**Fig. 4** schematically shows a cross section of the second transparent monolithic optical part 310 of the light guide assembly. The second transparent monolithic optical part 310 has a complementary shape with respect to the first transparent monolithic optical part 300. For example, the second transparent monolithic optical part 310 has a symmetrical shape with respect to the first transparent monolithic optical part 300. The first surface 315 of the second transparent monolithic optical part 310 of the light guide assembly therefore comprises a first prism array 312 and a second prism array 314. The prism array 312 has a complementary shape with respect to the prism array 302 of the first transparent monolithic optical part 300 of the light guide assembly. The prism array 314 has a complementary shape with respect to the prism array 304 of the first transparent monolithic optical part 300 of the light guide assembly. Since the second transparent monolithic optical part 310 has a complementary shape with respect to the first transparent monolithic optical part 300, the angle between the prism array 312 and the prism array 314 is -β (which can be decomposed into -β1 and -β2 with respect to the y direction and to the angles β1 and β2 used for the first transparent monolithic optical part 300). In a particular embodiment, the surfaces of the prism array 302 and of the prism array 304 are manufactured to be parallel to the respective complementary shaped surfaces of the prism array 312 and of the prism array 314 once the first transparent monolithic optical part 300 and second transparent monolithic optical part 310 are assembled to form the light guide assembly.

The first surface 315 of the second transparent monolithic optical part 310 of the light guide assembly comprises a part 311 that is intended to face the I50 surface 301 of the first surface 305 of the first transparent monolithic optical part 300 of the light guide assembly and that is therefore parallel to the second surface 316 of the second transparent monolithic optical part 310 of the light guide assembly. Said part 311 of said first surface 315 does not have a reflective coating. The distance between said part 311 of said first surface 315 and said second surface 316 is substantially equal to half the thickness of light guide assembly.

The first surface 315 of the second transparent monolithic optical part 310 of the light guide assembly comprises a part 313 that is intended to face the I50' surface 303 of the first surface 305 of the first transparent monolithic optical part 300 of the light guide assembly and that is therefore parallel to the second surface 316 of the second transparent monolithic optical part 310 of the light guide assembly. Said part 313 of said first surface 315 does not have a reflective coating. Preferably, the distance between said part 313 of said first surface 315 and said second surface 316 is substantially equal to half the thickness of light guide assembly. As for the first transparent monolithic optical part 300, this distance is not strictly equal to half the thickness of the light guide assembly due to the presence of adhesive material (as explained hereafter) and further due to potential manufacturing inaccuracy. Moreover, this distance could be different as far as it is coherently defined according to the transmission-reflection ratio of a partially reflected coating applied thereon (see hereafter) so as to completely fill the light guide assembly with necessary field rays.

In a variant embodiment (as already mentioned with respect to Fig. 3), the partially-reflective coating of the I50 element and/or of the I50' element is present on the second transparent monolithic optical part 310 of the light guide assembly instead of being present on the first transparent monolithic optical part 300 of the light guide assembly. It therefore respectively means that the aforementioned part 311 of the first surface 315 has partially-reflective coating forming the I50 element and/or the aforementioned part 313 of the first surface 315 has partially-reflective coating forming the I50 element.

In a particular embodiment, the second surface 316 of the second transparent monolithic optical part 310 of the light guide assembly is covered by an anti-reflection coating.

**Fig. 5** depicts a light guide assembly 400 that is formed using the first transparent monolithic optical part 300 shown in Fig. 3 and the second transparent monolithic optical part 310 shown in Fig. 4. As disclosed above, the first transparent monolithic optical part 300 has partially-reflective coating on the I50 and I50' elements, and on the active surfaces of the O-O and X-X elements, and the second transparent monolithic optical part 310 has no coating thereon. In a variant embodiment (as already mentioned with respect to Figs. 3 and 4), the partially-reflective coating of the I50 element and/or of the I50' element is present on the second transparent monolithic optical part 310 instead of being present on the first transparent monolithic optical part 300.

The first 300 and second 310 transparent monolithic optical parts have complementary shapes and are assembled together with a transparent adhesive material 401 such that the thickness of the light guide assembly 400 is constant from the I50 element to the X-X element, wherein the refractive index of the transparent adhesive material 401 is the same as the refractive index of the first 300 and second 310 transparent monolithic optical parts (with a negligible margin). In other words, the aforementioned second surfaces 306 and 316 are parallel to each other. The light guide assembly 400 can therefore be seen as a plate embedding the I50, O-O, I50' and X-X elements inside it.

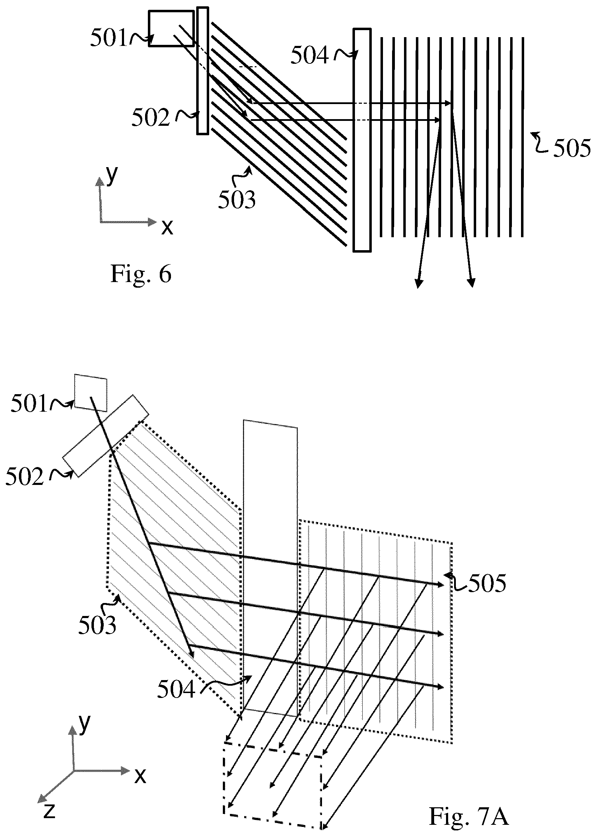

**Fig. 6** depicts a schematic and simplified top view of the light guide assembly, where an in-coupling zone 501 is shown. Global propagation direction of rays inside the light guide assembly is also shown. The role of the in-coupling zone 501 is to in-couple rays of the virtual image inside the light guide assembly. When said rays enters the in-coupling zone 501, they are injected inside the substrate of the light guide assembly and propagate inside the light guide assembly by total internal reflection. The rays then hit the coating of the I50 element 502 and split into two directions due to the partially reflective character of the coating of the I50 element 502. Each in-coupled ray thus generates two rays, the one transmitted by the coating of the I50 element 502 and the other reflected by the coating of the I50 element 502. Both rays then hit the O-O element 503. Each active surface of the O-O element 503 partially reflects rays and partially transmits rays due to a partially reflective coating applied thereon, thus generating multiple rays from each incident ray to enlarge the ray beam. The resulting beam made of multiple rays out of the O-O element 503 continues to propagate inside the light guide assembly and hits the coating of the I50' element 504. Each ray out of the O-O element 503 thus splits into two directions due to the partially reflective character of the coating of the I50' element 504, one transmitted by the coating of the I50' element 504 and one reflected by the coating of the I50' element 504. Both rays then hit the X-X element 505. Some portions of the rays are then partially reflected by the active surface of prism array of the X-X element 505 due to the partially reflective coating applied on said active surfaces and are then extracted out of the light guide assembly, while some non-reflected portions of the rays continue to propagate inside the light guide assembly and hit following active surfaces of the prism array of the X-X element 505 for further extraction. Thus, all fields with different directions are partially extracted so as to form an extracted image in the eye-box. The aforementioned angles $\alpha 1$, $\alpha 2$, $\beta 1$ and $\beta 2$ are defined so as to avoid ghost images inside the extracted image, wherein such ghost images may be generated due to multiple partial reflections. The aforementioned angles $\alpha 1$, $\alpha 2$, $\beta 1$ and $\beta 2$ may be defined thanks to experimental tests. The aforementioned angles $\alpha 1$, $\alpha 2$, $\beta 1$ and $\beta 2$ may be otherwise determined thanks to simulations, for example using ghost image tracking. The ghost image tracking is performed by computing a unity k-vector of each field, represented by the cosine angle along x, y and z directions in a reference orthonormal coordinate system of the light guide assembly. Such computing is purely angular, whereby the reflection of the k-vector on each surface of the prism arrays, on each external flat surface of the light guide assembly and on the coating of the I50 and I50' elements may show a ghost image shifted with respect to the extracted image. This computing shows some preferred values of the angles $\alpha 1$, $\alpha 2$, $\beta 1$ and $\beta 2$ for which no ghost images interfering with the extracted image.

As an example, a field of view of 50 degrees is in-coupled inside a light guide assembly made of plastic material having a refractive index *nd* = 1.6422 (e.g., OKP-1 from Osaka Gas Chemical, Co, Japan). In this example, the prism array of the O-O element has a pitch of 1.66 millimeters and the prism array of the X-X element has a pitch of 1.76 millimeters. The in-coupled chief ray of the virtual image are perpendicular to the external flat surfaces of the light guide assembly and the chief ray of the extracted image are also perpendicular to the external flat surfaces of the light guide assembly. By selecting $\alpha1$ = 34 degrees, $\alpha2$ = 25.5 degrees, $\beta1$ = 0 and $\beta2$ = -65degrees, it is possible to obtain an extracted image without any ghost image.

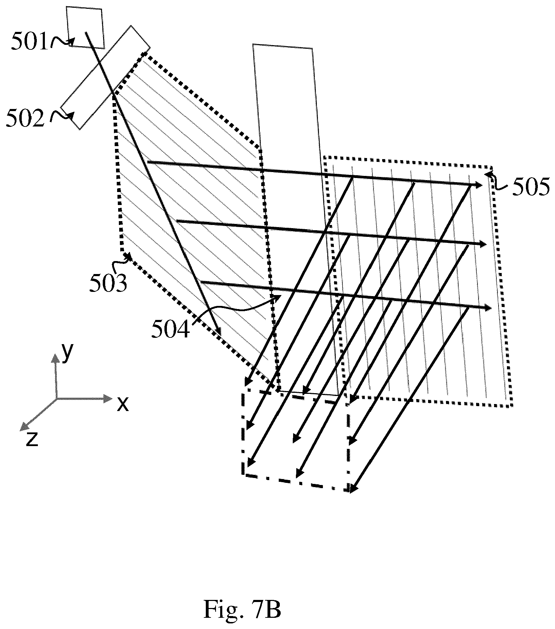

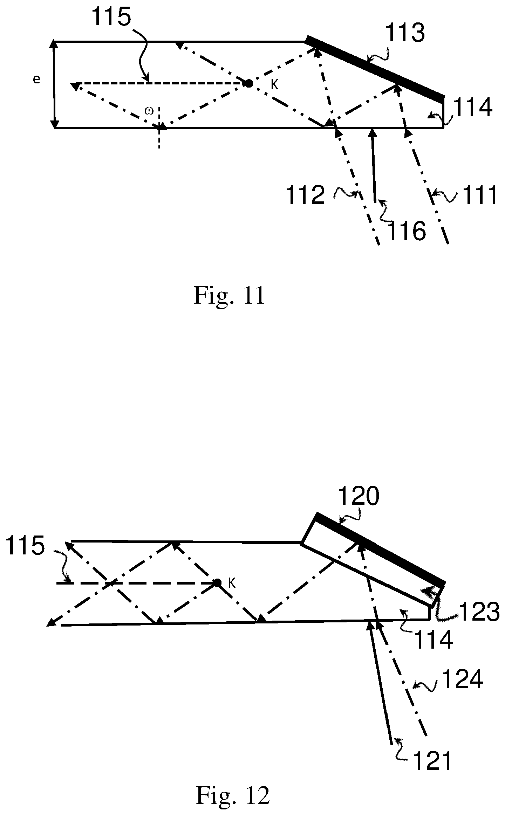

**Fig. 7A** depicts a perspective view of the embodiment of **Fig.6**, whereby global propagation direction of rays inside the light guide assembly, as well as extracted rays are shown. The rays of the virtual image are in-coupled by an in-coupler. The in-coupler is preferably embedded in the light guide assembly and formed by combination of the complementary shapes of the first 300 and second 310 transparent monolithic optical parts once assembled. An embodiment is disclosed hereafter with respect to Fig. 11. The in-coupled rays are guided by total internal reflection between the two parallel faces of light guide assembly, split by the I50 area and then expended in one direction by the O-O array, then they are split again by the I50' area and finally partially extracted out of the light guide to fill in a large area called the eye-box or eye motion box. The eye-box should be large for maximum visual comfort for the user. For example, the eye-box should have a size of 11mm x 7mm for an image of 50 degrees field of view. The eye-box location is usually between 15mm and 25mm from the user's eye (eye relief). All the fields, or beam directions, should be present in the eye-box to avoid missing any part of the extracted image and to reduce vignetting of the image border. **Fig. 7B** depicts a variant perspective view, wherein the angle $\beta1$ = 5 degrees, whereas $\beta1$ = 0 degrees on Fig. 7A (the other angles are adapted accordingly).

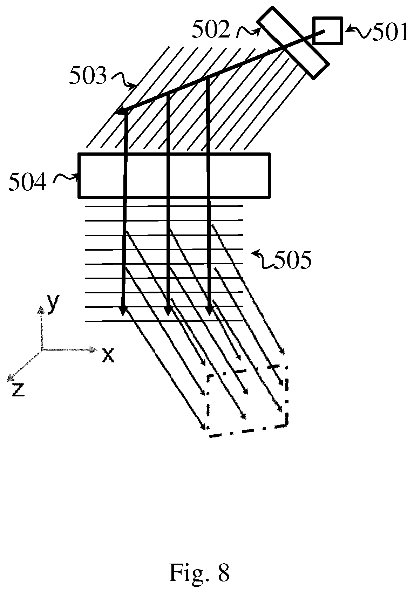

**Fig. 8** depicts another embodiment where the arrangement of the O-O and X-X elements is slightly different from the arrangement shown in Fig. 7A. Considering that the x direction is horizontal (in the orthogonal reference of the light guide assembly), the prism ridges of the X-X element substantially extend horizontally in Fig. 8, whereas they substantially extend vertically in Fig. 7A. The choice between these horizontal and vertical arrangements depends on several parameters, such as the required final shape of the light guide assembly, the image format of the extracted image and finally on the clearance of the final display when integrated into smart glasses or an Augmented Reality (AR) Head Mounted Display (HMD) or mixed-reality (XR) display or head worn display device.

**Figs. 9A and 9B** illustratively show top view and respective cross sections (along axis G-G and H-H) of a same light guide assembly in one embodiment of the present invention. Figs. 9A and 9B show the two successive sets composed of one flat surface followed by one prism array, namely the I50 and O-O elements on one hand, and the I50' and X-X elements on the other hand. At the bottom of Fig 9A, a cross section obtained according to a broken section line G-G that is perpendicular to the orientations of the prim arrays of the O-O and X-X elements is shown, wherein the actual pitch of the prism arrays of the O-O and X-X elements is shown. At the bottom of Fig 9B, another cross section obtained according to a straight cross section line H-H shows in cross section view the two successive sets composed of one flat surface followed by one prism array, namely the I50 and O-O elements on one hand, and the I50' and X-X elements on the other hand.

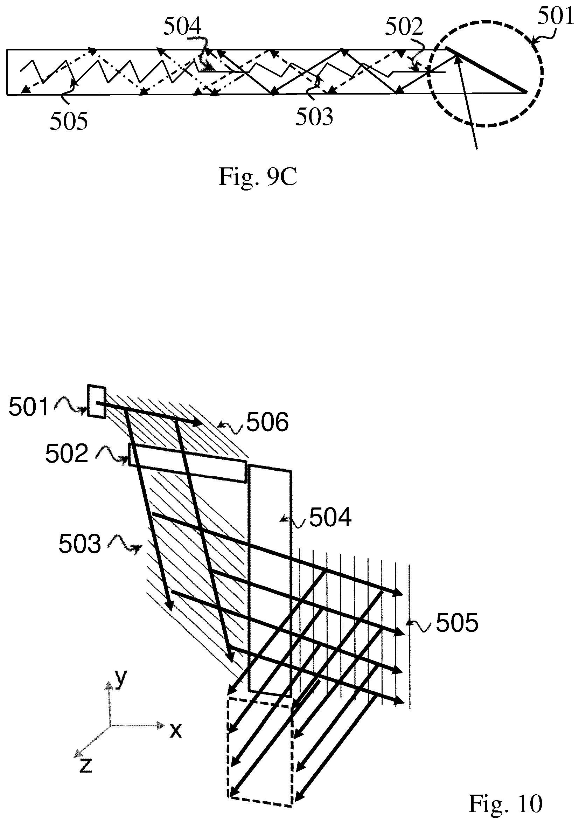

**Fig.9C** depicts a cross section along dashed lines (as in Fig. 9B) along the prisms of the 0-0 and X-X elements of the light guide assembly, whereby a ray trace is shown. Rays of the virtual image are in-coupled via the in-coupling zone 501. The in-coupled ray splits when reaching the partially-reflective coating of the I50 element and continues propagating by total internal reflection, then hits the active surfaces of the O-O element to generate other rays. These generated other rays split again when reaching the partially reflective coating of the I50' element before reaching the active surfaces of the X-X element, from where they are partially extracted.

**In Fig.10,** more than two prism arrays are present in the light guide assembly. Here the virtual image rays are in-coupled and then hit the active surfaces of another prism array, referred herein to as O-O' element 506, placed upstream (with respect to global virtual image rays propagation in the light guide assembly) the sets of two successive sets composed of one flat surface followed by one prism array, namely the I50 and O-O elements on one hand, and the I50' and X-X elements on the other hand. The O-O' element 506 acts as the O-O element and has the same function. The O-O' element and the O-O element have different orientations in the x,y plan. After having been reflected by the O-O' element 506, the rays hit the I50 element, followed by the O-O element followed by the I50' element and the X-X element as already described above. The advantage of such an embodiment is to further expand rays' beam and adapt expansion areas to the final external shape of the light guide assembly in front of the user's eye.

**In Fig.11,** an embodiment of an in-coupler is shown. The in-coupler has a reflective surface on an in-coupling prism 114 embedded into the light guide assembly by the complementary shapes of the first and second monolithic transparent optical parts of the light guide assembly. In this case a fully reflecting coating is applied to an external surface 113 of the in-coupling prism 114 so as to form an in-coupling mirror that guides all rays of the virtual image inside the light guide assembly. The dashed line on Fig. 11 represents the partially-reflective coating 115 of the I50 element, the role of which being to generate additional rays to fill in the light guide assembly with a smaller entry pupil while maintaining a small light guide assembly thickness. The position of the coating 115 of the I50 element, as well as the length thereof, can be determined as follows. The length is fixed greater than or equal to e*TAN(ω), where ω is the largest incident angle of virtual image rays, with respect to the field of view of the image rays, on the aforementioned flat second surfaces 306 or 316 of the light guide assembly. The starting point K of the position of the partially-reflective coating 115 of the I50 element (with respect to the in-coupler location) is located at the intersection between the largest field ray 112 directly reflected by the in-coupling mirror with another largest field ray 111 (both rays are parallel) that is reflected by the in-coupling mirror and reflected again by one flat external surface of the light guide assembly by total internal reflection. The distance between the ray 111 and the ray 112 is the entry pupil width.

In a variant embodiment, the rays of the virtual image are in-coupled via said external surface of the in-coupling prism 114 instead of using the aforementioned in-coupling mirror. It depends on which side of the light guide assembly a collimator system has to be assembled with the light guide assembly.

The Fig. 11 arrangement works well when the collimator system is assembled with the light guide assembly such that the in-coupled field zero 116 (or centric ray of the in-coupled virtual image, also referred to as the chief ray) is perpendicular to the external flat surfaces of the light guide assembly and the extracted field zero (or centric ray of the extracted image, also referred to as the chief ray) is also perpendicular to the external flat surfaces of the light guide assembly. However, when the in-coupled field zero is not perpendicular to the external flat surfaces of the light guide assembly and the extracted field zero is also not perpendicular to the external flat surfaces of the light guide assembly, the arrangement of Fig.11 may generate color aberrations since the light guide assembly is no more equivalent to a medium with parallel diopters. When equivalent to a medium with non-parallel diopter, the light guide assembly is like an equivalent thin prism of the same material as the light guide assembly, which generates color aberrations. To correct said color aberrations, a transparent wedge prism 123 may be assembled to the light guide assembly and more particularly to the in-coupling prism 114, as depicted in **Fig.12.** Here, the in-coupling prism 114 has no reflective coating thereon and the transparent wedge prism 123 has an external surface 120, with a fully-reflective coating or a mirror, that fully reflects the virtual image rays. The selection of the material of the transparent wedge prism 123 is a function of the difference of parallelism of the equivalent prism, of the difference between the refractive index of the transparent wedge prism with the refractive index of the light guide assembly, as well as of the difference between the Abbe number between their respective materials. Fig.12 depicts such an arrangement, where a non-perpendicular chief ray 121 is in-coupled to the light guide assembly. Here again, the position of the point K is defined as the starting point of the partially-reflective coating of the I50 element and results from the intersection of largest incident angle of virtual image ray 124 when in-coupled in the light guide assembly inside the in-coupling zone.

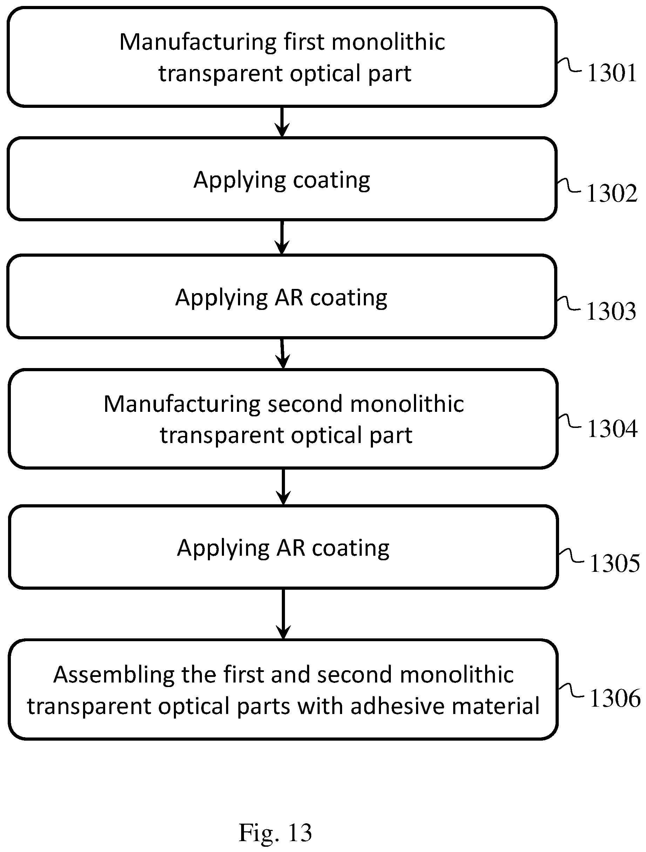

**Fig.13** depicts a method for manufacturing and assembling the first and second monolithic optical parts of the light guide assembly.

In a step 1301, the first transparent monolithic optical part is manufactured, for example by molding techniques, including injection molding, injection compression molding, hot embossing, resin thermoforming or by using a UV-cured monomer. The first transparent monolithic optical part may also be obtained by machining a block of plastic or glass. The first transparent monolithic optical part has prism arrays on one of its external surfaces, as already detailed with respect to Fig. 3.

In a step 1302, a partially-reflective coating is applied on the first transparent monolithic optical part so as to form the aforementioned I50 and I50' elements, as well as on the prism arrays so as to form the active surfaces of the aforementioned O-O and X-X elements.

In an optional step 1303, an anti-reflection coating is applied in the other one of the external surfaces of the first transparent monolithic optical part, namely the one with no prism arrays thereon.

In a variant embodiment (as already mentioned with respect to Figs. 3 and 4), the partially-reflective coating of the I50 element and/or of the I50' element is applied on the second transparent monolithic optical part instead of being applied on the first transparent monolithic optical part.

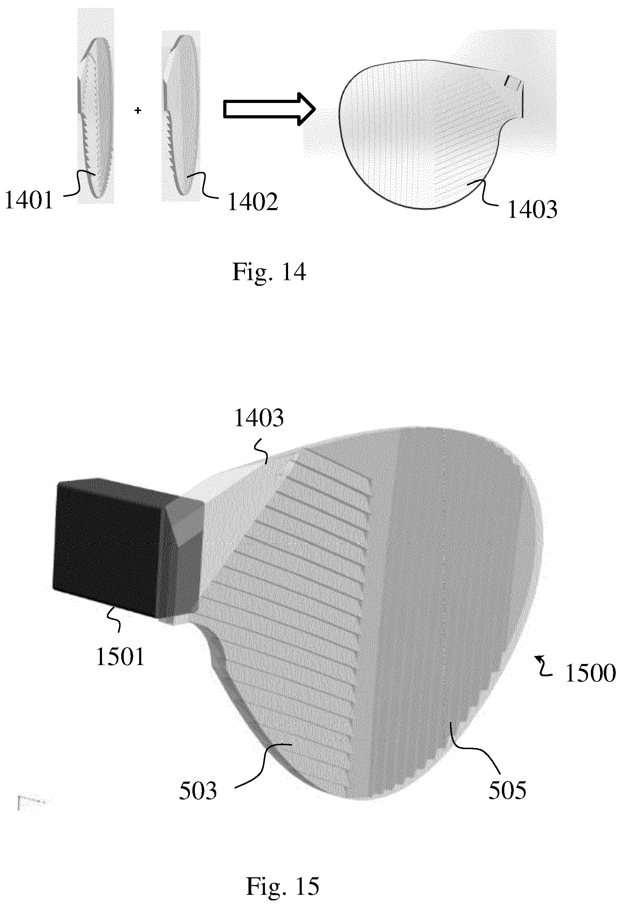

This resulting first transparent monolithic optical part is schematically shown as 1401 in **Fig. 14.**

In a step 1304, the second transparent monolithic optical part is manufactured, for example by molding techniques, including injection molding, injection compression molding, hot embossing, resin thermoforming or by using a UV-cured monomer. The second transparent monolithic optical part may also be obtained by machining a block of plastic or glass. The second transparent monolithic optical part has a complementary shape with respect to the first transparent monolithic optical part, as already detailed with respect to Fig. 4. The refractive index of the material used to manufacture the second transparent monolithic optical part is similar as the one of the material used to manufacture the first transparent monolithic optical part in order ensure optical continuity.

In an optional step 1305, an anti-reflection coating is applied in the other one of the external surfaces of the second transparent monolithic optical part, namely the one with no prism arrays thereon.

This resulting first transparent monolithic optical part is schematically shown as 1402 in Fig. 14.

In a step 1306, the first transparent monolithic optical part and the second transparent monolithic optical part are assembled together, using an adhesive material, such as glue. The prism arrays on the first surface of the first transparent monolithic optical part are placed opposite their complementary prism arrays on the first surface of the second transparent monolithic optical part, as already detailed with respect to Fig. 5. The refractive index of the adhesive material is similar the one of the materials used to manufacture the first and second transparent monolithic optical parts in order to ensure optical continuity. After assembling the first transparent monolithic optical part and the second transparent monolithic optical part, the light guide assembly is formed with its external surfaces (faces) plane and parallel to each other.

The resulting light guide assembly is schematically shown as 1403 in Fig. 14.

Other steps may be added in the foregoing method, such as applying coating so as to form the aforementioned in-coupling mirror.

Other steps may be added in the foregoing method, such as assembling the light guide assembly with a collimator system so as to form a display module.

Other steps may be added in the foregoing method, such as adding partially-reflective coating on parts of at least one external surface of the light guide assembly where internal reflections of the virtual image rays are intended and/or one parts of said at least one external surface of the light guide assembly where no reflections of the virtual image rays are intended. This homogenizes the transparency aspect of the light guide assembly and thus increases user's comfort.

Other steps may be added in the foregoing method, such as integrating the display module in a smart glass device or an Augmented Reality (AR) Head Mounted Display (HMD) or head worn display, either for a monocular or a binocular configuration.

**Fig.15** schematically represents a display module 1500. The display module 1500 is an assembly of the light guide assembly 1403, which has been obtained by executing the method disclosed above with respect to Figs. 13 and 14, and a collimator system 1501. The collimator system 1501 is arranged with the light guide assembly 1403 for projecting a virtual image at infinity and in-coupling rays thereof in the light guide assembly so as to ensure propagation of rays as detailed above. With such an arrangement of the display module 1500, the collimator system 1501 can easily fit within an eyeglass frame temple.

Such a display module 1500 can be integrated into a smart glass device or an Augmented Reality (AR) Head Mounted Display (HMD) or head worn display, either for a monocular or a binocular configuration.

In a particular embodiment, the Head Mounted Display comprises the foregoing display module configured for right eye vision as well as the foregoing display module configured for left eye vision. In this case, the display modules are symmetrically arranged with respect to the median plan between the user's eyes. In other words, the light guide assembly for the left eye vision is structurally symmetrical to the light guide assembly for the right eye vision with respect to the median plan between the user's eyes (position of the in-coupling zones, position of the I50, O-O, I50' and X-X elements).

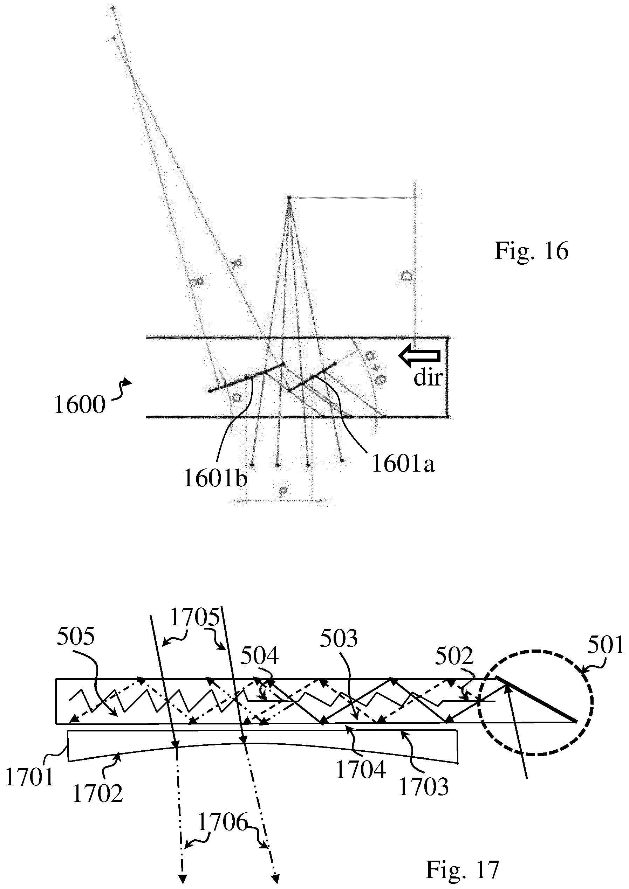

**Fig. 16** schematically represents a simplified cross section of the X-X element in a particular embodiment of the invention, wherein the orientation of the active surfaces of the prism array of the X-X element differs from one prism to another (i.e., the aforementioned angle $\alpha 1$ differs from one prism to another). More particularly, said actives surfaces are spherical partially-reflective surfaces with the same radius of curvature R. Said spherical surfaces are preferably concave with respect to the first surface of the first transparent monolithic optical part of the light guide assembly, namely recessed in the surface of the first transparent monolithic optical part of the light guide assembly. In a variant, said spherical surfaces are convex in order to compensate for hyperopia by thus enabling projection at a negative distance.

Since the rays of the virtual image are collimated to infinity at the output of the collimator system 1501, the in-coupled rays are therefore all parallel for each field of the transported virtual image. By using a spherical partially-reflective surface 1601a of radius R inclined in the light guide assembly 1600, a part of the virtual image is extracted from the light guide assembly 1600 and is projected at a finite distance D from one external (flat) surface of the light guide assembly. Considering another spherical partially-reflective surface 1601b of radius R inclined in the light guide assembly 1600, another part of the virtual image is extracted from the light guide assembly 1600 and is also projected at the finite distance D from said external (flat) surface of the light guide assembly. And so on, so as to extract the whole virtual image and project it at the finite distance D by virtue of the prism array of the X-X element.

The prism array of the X-X element presents a constant pitch (or step) P, which means that the distance between any successive prisms of the prism array of the X-X element is constant. The active surfaces of the prism array of the X-X element are thus spherical partially-reflective surfaces arranged such that any point or pixel of the virtual image, carried by the rays extracted from the light guide assembly 1600 by said spherical partially-reflective surfaces (as symbolically illustrated in Fig. 16) focuses at a single point located at the finite distance D from the light guide assembly.

To achieve such a focus at the finite distance D, the inclination of each active surface is smaller by an average angle $\theta$ than any immediately preceding active surface in the succession of prisms in the prism array (in the direction of rays propagation "dir" in Fig. 16). Thus, the last prism in sequence (in the direction of propagation "dir" in Fig. 16) has a profile which forms an average angle $\alpha$ with the aforementioned second (flat) surface 306, the last but one prism in sequence has a profile which forms an average angle $\alpha + \theta$ with the aforementioned second (flat) surface 306, etc. In other words, considering an array of M prisms, the *i*-th prism in sequence in the direction of propagation of the rays of the transported virtual image (in the direction of propagation "dir" in Fig. 16) has a profile that forms an average angle $\alpha + (M - i) * \theta$, with $i = 1,..., M$, with the direction of propagation of the transported virtual image (i.e., with the aforementioned second (flat) surface 306 of the first transparent monolithic optical part).

Thus, in order to project the extracted image at the finite distance D from said external (flat) surface 306 of the light guide assembly, the following relationships have to be met:

$$R = 2 * n * D$$

$$\theta = \arctan ( P / D ) / (2 * n)$$

wherein n is the refractive index of the material from which the first transparent monolithic optical part has been manufactured.

This arrangement enables an extraction of the virtual image in-coupled into the light guide assembly 1600 at a finite distance (represented by D). The presented arrangement acts as a negative lens causing the beam of the extracted image to diverge in order to project this image at a finite distance (represented by D) when it enters the user's eye, in the manner of an ophthalmic lens (spectacle lens), but advantageously offers a solution directly integrated into the light guide assembly. In this arrangement, only the extracted image is placed at a finite distance, while the rays from the see-through effect only pass through the light guide assembly 1600, not being deflected by the proposed arrangement of the X-X element. The angle $\alpha$ is fixed by optical guidance conditions, in particular the placement and the expected characteristics of the collimator system 1501 in-coupling the virtual image so that the entire virtual image is guided by total internal reflection in the light guide assembly up to the X-X element.

By way of illustration, to achieve a light guide assembly that focuses the extracted virtual image at a distance D equal to 2 meters in the air, considering that the refractive index *n* of the material constituting the first and second transparent monolithic optical parts of the light guide assembly and the adhesive material assembling both is equal to 1.6, then the radius R is equal to 6.4 meters and the angle $\theta$ is equal to 0.014 degrees, for a pitch P equal to 1.6 millimeters.

**Fig. 17** depicts another embodiment using the light guide assembly of Fig. 9C, where a vision correction lens 1701 is assembled with the light guide assembly to correct the user's vision for both the virtual image extracted from light guide assembly and see-through effect rays crossing the light guide assembly (external scene (real world)). The rays 1705 coming from the external scene cross the light guide assembly without being deflected since the light guide assembly is equivalent to a medium with parallel surfaces. However, when the rays 1705 hit the external surface 1702 of the vision correction lens 1701, these rays change direction according to the surface 1702 curvature in order to correct the user's vision. In the example of Fig. 17, the vision correction lens 1701 has a negative power to provide vision correction for nearsighted user. The external surface 1702 may, in a variant, have a positive curvature if the vision correction is intended for farsighted user. The vision correction lens 1702 has a flat surface 1703, opposite to the external surface 1702, which is separated from light guide assembly by air space 1704.

In an alternative embodiment, the air space 1704 is replaced by low refraction index adhesive transparent material to enable adequate total internal reflection of the virtual image rays and to fix the vision correction lens 1701 on the light guide assembly.

In yet another embodiment, the flat surface 1703 has a coating thereon which reflects rays incident at an angle larger than a critical angle of total internal reflections of the light guide assembly and which transmits rays incident at an angle below said critical angle.

**Claims**

1. A light guide assembly (400) comprising:

   - a first transparent monolithic optical part (300) having a refractive index;
   - a second transparent monolithic optical part (310) having the same refractive index as the first transparent monolithic optical part;

   wherein

   - the first transparent monolithic optical part has a first surface (305) having two successive sets composed of one flat surface (301, 303, 502, 504) followed by one prism array (302, 304, 503, 505), the flat surface of each set has a partially-reflective coating thereon, and the first transparent monolithic optical part further has an opposite second surface (306) that is flat,
   - each prism array of the first surface of the first transparent monolithic optical part has at least two prisms, each prism being composed of a first surface and a second surface which are oblique with respect to each other and with respect to said opposite second surface of the first transparent monolithic optical part, the first surfaces of the prism arrays have a partially-reflective coating thereon and the second surfaces of the prism arrays have no reflective coating thereon,
   - the second transparent monolithic optical part has a first surface (315) having a geometrically complementary shape with respect to the shape of the first surface of the first transparent monolithic optical part, and the second transparent monolithic optical part of the light guide assembly further has an opposite second surface (316) that is flat,

- the first and second transparent monolithic optical parts are assembled together using an optically transparent adhesive material (401), such that the second surfaces of the first and second transparent monolithic optical parts of the light guide assembly are parallel to each other, the optically transparent adhesive material having the same refractive index as the first and second transparent monolithic optical parts.

2. The light guide assembly according to claim 1, comprising an in-coupling zone (501) for in-coupling rays of a virtual image.

3. The light guide assembly according to claim 2, wherein:

   - the flat surface of the last set in sequence with respect to a global direction of propagation of the rays of the virtual image in the light guide assembly, among said sets, implements a splitting-plus-expansion function with respect to the rays of the virtual image,
   - the prism array of said last set in sequence implements a multiplication-plus-extraction function with respect to the rays of the virtual image,
   - the flat surface of the other set implements a splitting function with respect to the rays of the virtual image, and
   - the prism array of said other set implements a multiplication function with respect to the rays of the virtual image.

4. The light guide assembly according to claim 3, wherein, for each prism array, the first surfaces of the prisms of the prism array in question are parallel to each other, and the second surfaces of the prisms of the prism array in question are also parallel to each other.

5. The light guide assembly according to claim 3, wherein, for each prism array, the first surfaces of the prisms of the prism array in question are oblique flat surfaces.

6. The light guide assembly according to claim 3, wherein, each first surface of the prism array of the last set in sequence is spherical and has a lower inclination by an average angle θ than the potential immediately preceding first surface of said prism array in the succession of prisms according to the global direction of propagation of the rays of the virtual image in the light guide assembly, so as to extract the virtual image at a finite distance D.

7. The light guide assembly according to claim 6, wherein the prism array of the last set in sequence fulfills the following relationships:

$$R = 2 * n * D$$

$$\theta = \arctan ( P / D ) / (2 * n)$$

wherein n is the refractive index of the first transparent monolithic optical part, R is a radius of the first surfaces of the prism array of the last set in sequence, and P is a constant pitch between any successive prisms of the prism array of the last set in sequence.

8. The light guide assembly according to any one of claims 3 to 7, wherein the prism arrays have different orientations in a x,y plane of a reference direct orthonormal coordinate system of the light guide assembly defining x, y and z directions, and wherein thickness of the light guide assembly lies in the z direction of said reference direct orthonormal coordinate system.

9. The light guide assembly according to any one of claims 3 to 8, wherein another prism array (506) is placed upstream, with respect to the global direction of propagation of the rays of the virtual image in the light guide assembly, the sets of two successive sets composed of one flat surface followed by one prism array, wherein each prism of said another prism array being composed of a first surface and a second surface which are oblique with respect to each other and with respect to said opposite second surface of the first transparent monolithic optical part, the first surfaces of said another prism array have a partially-reflective coating thereon and the second surfaces of said another prism array have no reflective coating thereon, and wherein said another prism array implements a multiplication function with respect to the rays of the virtual image.

10. The light guide assembly according to any one of claims 2 to 9, comprising an in-coupler in a form of an in-coupling prism (114) embedded into the light guide assembly by the complementary shapes of the first and second monolithic transparent optical parts of the light guide assembly.

11. The light guide assembly according to claim 10, wherein the in-coupling prism has a reflective surface on an external surface (113) thereof.

12. The light guide assembly according to claim 10, wherein a transparent wedge prism (123) is assembled to the in-coupling prism, the transparent wedge prism has an external surface (120) with a fully-reflective coating or a mirror, wherein the transparent wedge prism is composed of a material selected as a function of:

- a difference of parallelism of an equivalent prism to which the light guide assembly is equivalent when an in-coupled field zero is not perpendicular to the second surfaces of the first and second transparent monolithic optical parts and when an extracted field zero is also not perpendicular to the second surfaces of the first and second transparent monolithic optical parts,
- a difference between a refractive index of the transparent wedge prism with the refractive index of the first and second transparent monolithic optical parts, and
- a difference between an Abbe number between their respective materials.

13. A display module (1500) formed by an assembly of the light guide assembly according to any one of claims 2 to 9 and a collimator system (1501), wherein the collimator system is arranged with the light guide assembly for projecting the virtual image at infinity and in-coupling rays thereof in the light guide assembly.

14. A head mounted display comprising the display module according to claim 13 configured for right eye vision and/or the display module according to claim 13 configured for left eye vision.

15. A method for manufacturing a light guide assembly, comprising:

- performing a manufacturing process to manufacture a first transparent monolithic optical part having a refractive index and a second transparent monolithic optical part having the same refractive index as the first transparent monolithic optical part;

wherein following the manufacturing process

- the first transparent monolithic optical part has a first surface having two successive sets composed of one flat surface followed by one prism array, and the first transparent monolithic optical part further has an opposite second surface that is flat,
- each prism array of the first surface of the first transparent monolithic optical part has at least two prisms, each prism being composed of a first surface and a second surface which are oblique with respect to each other and with respect to said opposite second surface of the first transparent monolithic optical part,
- the second transparent monolithic optical part has a first surface having a geometrically complementary shape with respect to the shape of the first surface of the first transparent monolithic optical part, and the second transparent monolithic optical part of the light guide assembly further has an opposite second surface that is flat,

wherein the manufacturing process further comprises:

- applying a partially-reflective coating on the flat surface of each set and on the first surfaces of the prism arrays, while the second surfaces of the prism arrays have no reflective coating thereon,
- assembling the first and second transparent monolithic optical parts together using an optically transparent adhesive material, such that the second surfaces of the first and second transparent monolithic optical parts of the light guide assembly are parallel to each other, the optically transparent adhesive material having the same refractive index as the first and second transparent monolithic optical parts.

**Patentansprüche**

1. Lichtleiteranordnung (400) umfassend:

- ein erstes transparentes monolithisches optisches Teil (300) mit einem Brechungsindex;
- ein zweites transparentes monolithisches optisches Teil (310) mit demselben Brechungsindex wie das erste transparente monolithische optische Teil;

wobei

- das erste transparente monolithische optische Teil eine erste Fläche (305) mit zwei aufeinanderfolgenden Sätzen aufweist, die aus einer flachen Fläche (301, 303, 502, 504) zusammengesetzt sind, gefolgt von einem Prismen-Array (302, 304, 503, 505), die flache Fläche jedes Satzes eine teilweise reflektierende Beschichtung darauf aufweist und das erste transparente monolithische optische Teil ferner eine gegenüberliegende, zweite Fläche (306) aufweist, die flach ist,
- jedes Prismen-Array der ersten Fläche des ersten transparenten monolithischen optischen Teils wenigstens zwei Prismen aufweist, jedes Prisma aus einer ersten Fläche und einer zweiten Fläche zusammengesetzt ist, die schräg zueinander und zu der gegenüberliegenden, zweiten Fläche des ersten transparenten monolithischen optischen Teils verlaufen, die ersten Flächen der Prismen-Arrays eine teilweise reflektierende Beschichtung darauf aufweisen und die zweiten Flächen der Prismen-Arrays keine reflektierende Beschichtung darauf aufweisen,

- das zweite transparente monolithische optische Teil eine erste Fläche (315) mit einer geometrisch komplementären Form zur Form der ersten Fläche des ersten transparenten monolithischen optischen Teils aufweist und das zweite transparente monolithische optische Teil der Lichtleiteranordnung ferner eine gegenüberliegende, zweite Fläche (316) aufweist, die flach ist,

- das erste und zweite transparente monolithische optische Teil mithilfe eines optisch transparenten Klebematerials (401) zusammengesetzt sind, so dass die zweiten Flächen des ersten und zweiten transparenten monolithischen optischen Teils der Lichtleiteranordnung parallel zueinander verlaufen, das optisch transparente Klebematerial denselben Brechungsindex aufweist wie das erste und zweite transparente monolithische optische Teil.

2. Lichtleiteranordnung nach Anspruch 1, umfassend einen Einkopplungsbereich (501) zur Einkopplung von Strahlen eines virtuellen Bildes.

3. Lichtleiteranordnung nach Anspruch 2, wobei:

- die flache Fläche des letzten Satzes in Folge bezogen auf eine globale Ausbreitungsrichtung der Strahlen des virtuellen Bildes in der Lichtleiteranordnung unter den genannten Sätzen eine Aufteilungs-plus-Erweiterungsfunktion bezogen auf die Strahlen des virtuellen Bildes implementiert,

- das Prismen-Array des letzten Satzes in Folge eine Multiplikations-plus-Extraktionsfunktion bezogen auf die Strahlen des virtuellen Bildes implementiert,

- die flache Fläche des anderen Satzes eine Aufteilungsfunktion bezogen auf die Strahlen des virtuellen Bildes implementiert, und

- das Prismen-Array des anderen Satzes eine Multiplikationsfunktion bezogen auf die Strahlen des virtuellen Bildes implementiert.

4. Lichtleiteranordnung nach Anspruch 3, wobei für jedes Prismen-Array die ersten Flächen der Prismen des betreffenden Prismen-Arrays parallel zueinander verlaufen und die zweiten Flächen der Prismen des betreffenden Prismen-Arrays ebenfalls parallel zueinander verlaufen.

5. Lichtleiteranordnung nach Anspruch 3, wobei für jedes Prismen-Array die ersten Flächen der Prismen des betreffenden Prismen-Arrays schräge flache Flächen sind.

6. Lichtleiteranordnung nach Anspruch 3, wobei jede erste Fläche des Prismen-Arrays des letzten Satzes in Folge sphärisch ist und eine um einen durchschnittlichen Winkel θ geringere Neigung aufweist als die potentiell unmittelbar vorangehende erste Fläche des Prismen-Arrays in der Abfolge von Prismen entsprechend der globalen Ausbreitungsrichtung der Strahlen des virtuellen Bildes in der Lichtleiteranordnung, um das virtuelle Bild in einer endlichen Entfernung D zu extrahieren.

7. Lichtleiteranordnung nach Anspruch 6, wobei das Prismen-Array des letzten Satzes in Folge die folgenden Beziehungen erfüllt:

$$R = 2 * n * D$$

$$\theta = \arctan(P/D)/(2*n)$$

wobei n der Brechungsindex des ersten transparenten monolithischen optischen Teils ist, R ein Radius der ersten Flächen des Prismen-Arrays des letzten Satzes in Folge ist und P ein konstanter Abstand zwischen beliebigen aufeinanderfolgenden Prismen des Prismen-Arrays des letzten Satzes in Folge ist.

8. Lichtleiteranordnung nach einem der Ansprüche 3 bis 7, wobei die Prismen-Arrays verschiedene Orientierungen in einer x,y-Ebene eines direkten orthonormalen Referenzkoordinatensystems der Lichtleiteranordnung aufweisen, das die x-, y- und z-Richtung definiert, und wobei die Dicke der Lichtleiteranordnung in der Z-Richtung des direkten orthonormalen Referenzkoordinatensystems liegt.

9. Lichtleiteranordnung nach einem der Ansprüche 3 bis 8, wobei ein weiteres Prismen-Array (506) stromaufwärts bezogen auf die globale Ausbreitungsrichtung der Strahlen des virtuellen Bildes in der Lichtleiteranordnung platziert ist, wobei die Sätze zweier aufeinanderfolgender Sätze aus einer flachen Fläche zusammengesetzt sind, gefolgt von einem Prismen-Array, wobei jedes Prisma des weiteren Prismen-Arrays aus einer ersten Fläche und einer zweiten Fläche zusammengesetzt ist, die schräg zueinander und zu der gegenüberliegenden, zweiten Fläche des ersten transparenten monolithischen optischen Teils verlaufen, wobei die ersten Flächen des weiteren Prismen-Arrays eine teilweise reflektierende Beschichtung darauf aufweisen und die zweiten Flächen des weiteren Prismen-Arrays keine reflektierende Beschichtung darauf aufweisen, und wobei das weitere Prismen-Array eine Multiplikationsfunktion bezogen auf die Strahlen des virtuellen Bildes implementiert.

10. Lichtleiteranordnung nach einem der Ansprüche 2 bis 9, umfassend einen Einkoppler in Form eines Einkopplungsprismas (114), das durch die komplementären Formen des ersten und zweiten monolithischen transparenten optischen Teils der Lichtleiteranordnung in die Lichtleiteranordnung eingebettet ist.

11. Lichtleiteranordnung nach Anspruch 10, wobei das Einkopplungsprisma eine reflektierende Fläche auf einer Außenfläche (113) davon aufweist.

12. Lichtleiteranordnung nach Anspruch 10, wobei ein transparentes Keilprisma (123) an das Einkopplungsprisma angefügt ist, wobei das transparente Keilprisma eine Außenfläche (120) mit einer vollständig reflektierenden Beschichtung oder einem Spiegel aufweist, wobei das transparente Keilprisma aus einem Material zusammengesetzt ist, das je nach Folgendem ausgewählt ist:

   - einer Parallelitätsdifferenz eines äquivalenten Prismas, zu dem die Lichtleiteranordnung äquivalent ist, wenn ein eingekoppeltes Nullfeld nicht senkrecht zu den zweiten Flächen des ersten und zweiten transparenten monolithischen optischen Teils verläuft und wenn ein extrahiertes Nullfeld ebenfalls nicht senkrecht zu den zweiten Flächen des ersten und zweiten transparenten monolithischen optischen Teils verläuft,
   - einer Differenz zwischen einem Brechungsindex des transparenten Keilprismas und dem Brechungsindex des ersten und zweiten transparenten monolithischen optischen Teils, und
   - einer Differenz zwischen einer Abbe-Zahl zwischen ihren jeweiligen Materialien.

13. Anzeigemodul (1500), das von einer Anordnung der Lichtleiteranordnung nach einem der Ansprüche 2 bis 9 und einem Kollimatorsystem (1501) gebildet ist, wobei das Kollimatorsystem mit der Lichtleiteranordnung dafür angeordnet ist, das virtuelle Bild auf unendlich zu projizieren und Strahlen davon in die Lichtleiteranordnung einzukoppeln.

14. Kopfmontierte Anzeige umfassend das Anzeigemodul nach Anspruch 13, das für rechte Augensicht konfiguriert ist, und/oder das Anzeigemodul nach Anspruch 13, das für linke Augensicht konfiguriert ist.

15. Verfahren zur Herstellung einer Lichtleiteranordnung, umfassend:

   - Durchführen eines Herstellungsprozesses zur Herstellung eines ersten transparenten monolithischen optischen Teils mit einem Brechungsindex und eines zweiten transparenten monolithischen optischen Teils mit demselben Brechungsindex wie das erste transparente monolithische optische Teil;

wobei auf den Herstellungsprozess folgend

   - das erste transparente monolithische optische Teil eine erste Fläche mit zwei aufeinanderfolgenden Sätzen aufweist, die aus einer flachen Fläche zusammengesetzt sind, gefolgt von einem Prismen-Array, und das erste transparente monolithische optische Teil ferner eine gegenüberliegende, zweite Fläche aufweist, die flach ist,
   - jedes Prismen-Array der ersten Fläche des ersten transparenten monolithischen optischen Teils wenigstens zwei Prismen aufweist, jedes Prisma aus einer ersten Fläche und einer zweiten Fläche zusammengesetzt ist, die schräg zueinander und zu der gegenüberliegenden, zweiten Fläche des ersten transparenten monolithischen optischen Teils verlaufen,
   - das zweite transparente monolithische optische Teil eine erste Fläche mit einer geometrisch komplementären Form zur Form der ersten Fläche des ersten transparenten monolithischen optischen Teils aufweist und das zweite transparente monolithische optische Teil der Lichtleiteranordnung ferner eine gegenüberliegende, zweite Fläche aufweist, die flach ist,

wobei der Herstellungsprozess ferner Folgendes umfasst:

   - Aufbringen einer teilweise reflektierenden Beschichtung auf die flache Fläche jedes Satzes und auf die ersten Flächen der Prismen-Arrays, während die zweiten Flächen des Prismen-Arrays keine reflektierende Beschichtung darauf aufweisen,
   - Zusammensetzen des ersten und zweiten transparenten monolithischen optischen Teils mithilfe eines optisch transparenten Klebematerials, so dass die zweiten Flächen des ersten und zweiten transparenten monolithischen optischen Teils der Lichtleiteranordnung parallel zueinander verlaufen, das optisch transparente Klebematerial denselben Brechungsindex aufweist wie das erste und zweite transparente monolithische optische Teil.

**Revendications**

1. Ensemble formant guide de lumière (400) comprenant :

   - une première pièce (300) optique monolithique transparente ayant un indice de réfraction ;
   - une seconde pièce (310) optique monolithique transparente ayant le même indice de réfraction que la première pièce optique monolithique transparente ;

   dans lequel

   - la première pièce optique monolithique transparente présente une première surface (305) ayant deux ensembles successifs composés d'une surface plane (301, 303, 502, 504) suivie d'un réseau de prismes (302, 304, 503, 505), la surface plane de chaque ensemble présente sur celle-ci un dépôt (« coating ») semi-réfléchissant, et la première pièce optique monolithique transparente présente en outre une seconde surface opposée (306) qui est plane,
   - chaque réseau de prismes de la première surface de la première pièce optique monolithique transparente présente au moins deux prismes, chaque prisme étant composé d'une première surface et d'une seconde surface qui sont obliques l'une par rapport à l'autre et par rapport à ladite seconde surface opposée de la première pièce optique monolithique transparente, les premières surfaces des réseaux de prismes présentant sur celles-ci un dépôt semi-réfléchissant et les secondes surfaces des réseaux de prismes ne présentant pas de dépôt réfléchissant,
   - la seconde pièce optique monolithique transparente présente une première surface (315) ayant une forme géométriquement complémentaire par rapport à la forme de la première surface de la première pièce optique monolithique transparente, et la seconde pièce optique monolithique transparente de l'ensemble formant guide de lumière présente en outre une seconde surface opposée (316) qui est plane,
   - les première et seconde pièces optiques monolithiques transparentes sont assemblées à l'aide d'un matériau (401) adhésif optiquement transparent, de sorte que les secondes surfaces des première et seconde pièces optiques monolithiques transparentes de l'ensemble formant guide de lumière sont parallèles l'une à l'autre, le matériau adhésif optiquement transparent ayant le même indice de réfraction que celui des première et seconde pièces optiques monolithiques transparentes.

2. Ensemble formant guide de lumière selon la revendication 1, comprenant une région (501) de couplage d'entrée pour le couplage en entrée des rayons d'une image virtuelle.

3. Ensemble formant guide de lumière selon la revendication 2, dans lequel :

   - la surface plane du dernier ensemble en séquence par rapport à une direction globale de propagation des rayons de l'image virtuelle dans l'ensemble formant guide de lumière, parmi lesdits ensembles, met en œuvre une fonction de division-plus-expansion par rapport aux rayons de l'image virtuelle,
   - le réseau de prismes dudit dernier ensemble en séquence met en œuvre une fonction de multiplication-plus-extraction par rapport aux rayons de l'image virtuelle,
   - la surface plane de l'autre ensemble met en œuvre une fonction de division par rapport aux rayons de l'image virtuelle, et
   - le réseau de prismes dudit autre ensemble met en œuvre une fonction de multiplication par rapport aux rayons de l'image virtuelle.

4. Ensemble formant guide de lumière selon la revendication 3, dans lequel, pour chaque réseau de prismes, les premières surfaces des prismes du réseau de prismes en question sont parallèles les unes aux autres, et les secondes surfaces des prismes du réseau de prismes en question sont également parallèles les unes aux autres.

5. Ensemble formant guide de lumière selon la revendication 3, dans lequel, pour chaque réseau de prismes, les premières surfaces des prismes du réseau de prismes en question sont des surfaces planes obliques.

6. Ensemble formant guide de lumière selon la revendication 3, dans lequel chaque première surface du réseau de prismes du dernier ensemble en séquence est sphérique et présente une inclinaison plus faible d'un angle moyen θ que la potentielle première surface immédiatement précédente dudit réseau de prismes dans la succession de prismes selon la direction globale de propagation des rayons de l'image virtuelle dans l'ensemble formant guide de lumière, de manière à extraire l'image virtuelle à une distance finie D.

7. Ensemble formant guide de lumière selon la revendication 6, dans lequel le réseau de prismes du dernier ensemble en séquence satisfait aux relations suivantes :

$$R = 2 * n * D$$

$$\theta = \arctan ( P / D ) / (2 * n)$$

où n est l'indice de réfraction de la première pièce optique monolithique transparente, R est un rayon des premières surfaces du réseau de prismes du dernier ensemble en séquence, et P est un pas constant entre tous les prismes successifs du réseau de prismes du dernier ensemble en séquence.

8. Ensemble formant guide de lumière selon l'une quelconque des revendications 3 à 7, dans lequel les réseaux de prismes ont des orientations différentes dans un plan x, y d'un système de coordonnées orthonormales directes de référence de l'ensemble formant guide de lumière définissant les directions x, y et z, et dans lequel l'épaisseur de l'ensemble formant guide de lumière se situe dans la direction z dudit système de coordonnées orthonormales directes de référence.

9. Ensemble formant guide de lumière selon l'une quelconque des revendications 3 à 8, dans lequel un autre réseau de prismes (506) est placé en amont, par rapport à la direction globale de propagation des rayons de l'image virtuelle dans l'ensemble formant guide de lumière, les ensembles de deux ensembles successifs étant composés d'une surface plane suivie d'un réseau de prismes, dans lequel chaque prisme dudit autre réseau de prismes est composé d'une première surface et d'une seconde surface qui sont obliques l'une par rapport à l'autre et par rapport à ladite seconde surface opposée de la première pièce optique monolithique transparente, les premières surfaces dudit autre réseau de prismes présentent un dépôt (« coating ») semi-réfléchissant et les secondes surfaces dudit autre réseau de prismes ne présentent pas de dépôt réfléchissant, et dans lequel ledit autre réseau de prismes met en œuvre une fonction de multiplication par rapport aux rayons de l'image virtuelle.

10. Ensemble formant guide de lumière selon l'une quelconque des revendications 2 à 9, comprenant un coupleur d'entrée sous la forme d'un prisme (114) de couplage d'entrée intégré dans l'ensemble formant guide de lumière par les formes complémentaires des première et seconde pièces optiques monolithiques transparentes de l'ensemble formant guide de lumière.

11. Ensemble formant guide de lumière selon la revendication 10, dans lequel le prisme de couplage d'entrée présente une surface réfléchissante sur une surface externe (113) de celui-ci.

12. Ensemble formant guide de lumière selon la revendication 10, dans lequel un prisme (123) en coin transparent est assemblé au prisme de couplage d'entrée, le prisme en coin transparent présente une surface externe (120) avec un dépôt entièrement réfléchissant ou un miroir, dans lequel le prisme en coin transparent est composé d'un matériau choisi en fonction de :

    - une différence de parallélisme d'un prisme équivalent auquel l'ensemble formant guide de lumière est équivalent lorsqu'un champ nul en couplage d'entrée n'est pas perpendiculaire aux secondes surfaces des première et seconde pièces optiques monolithiques transparentes et lorsqu'un champ nul en extraction n'est pas non plus perpendiculaire aux secondes surfaces des première et seconde pièces optiques monolithiques transparentes,
    - une différence entre un indice de réfraction du prisme en coin transparent et l'indice de réfraction des première et seconde pièces optiques monolithiques transparentes, et
    - une différence entre un nombre d'Abbe entre leurs matériaux respectifs.

13. Module d'affichage (1500) formé par un ensemble de l'ensemble formant guide de lumière selon l'une quelconque des revendications 2 à 9 et un système de collimateur (1501), dans lequel le système de collimateur est agencé avec l'ensemble formant guide de lumière pour projeter l'image virtuelle à l'infini et coupler en entrée des rayons de celle-ci dans l'ensemble formant guide de lumière.

14. Visiocasque comprenant le module d'affichage selon la revendication 13 configuré pour la vision de l'œil droit et/ou le module d'affichage selon la revendication 13 configuré pour la vision de l'œil gauche.

15. Procédé de fabrication d'un ensemble formant guide de lumière, comprenant :

    - la réalisation d'un processus de fabrication pour fabriquer une première pièce optique monolithique transparente ayant un indice de réfraction et une seconde pièce optique monolithique transparente ayant le même indice de réfraction que la première pièce optique monolithique transparente ;

    dans lequel, à la suite du processus de fabrication

    - la première pièce optique monolithique transparente présente une première surface ayant deux ensembles successifs composés d'une surface plane suivie d'un réseau de prismes, et la première pièce optique monolithique transparente présente en outre une seconde surface opposée qui est plane,

- chaque réseau de prismes de la première surface de la première pièce optique monolithique transparente présente au moins deux prismes, chaque prisme étant composé d'une première surface et d'une seconde surface qui sont obliques l'une par rapport à l'autre et par rapport à ladite seconde surface opposée de la première pièce optique monolithique transparente,

- la seconde pièce optique monolithique transparente présente une première surface ayant une forme géométriquement complémentaire par rapport à la forme de la première surface de la première pièce optique monolithique transparente, et la seconde pièce optique monolithique transparente de l'ensemble formant guide de lumière présente en outre une seconde surface opposée qui est plane,

dans lequel le processus de fabrication comprend en outre :

- l'application d'un dépôt semi-réfléchissant sur la surface plane de chaque ensemble et sur les premières surfaces des réseaux de prismes, tandis que les secondes surfaces des réseaux de prismes ne présentent pas de dépôt réfléchissant,

- l'assemblage des première et seconde pièces optiques monolithiques transparentes à l'aide d'un matériau adhésif optiquement transparent, de sorte que les secondes surfaces des première et seconde pièces optiques monolithiques transparentes de l'ensemble formant guide de lumière sont parallèles l'une à l'autre, le matériau adhésif optiquement transparent ayant le même indice de réfraction que celui des première et seconde pièces optiques monolithiques transparentes.

101

103 102

100

104

Fig. 1 (prior art)

210

200

201

204

101

205

100

Fig. 2 (prior art)

300

306

305

301  302  303  304

Fig. 3

315  311  312  313  314

310

316

Fig. 4

300

400

401

310

Fig. 5

Fig. 6

Fig. 7A

501

502

503

504

505

y

x

z

Fig. 7B

Fig. 8

Fig. 9A

Fig. 9B

504    502    501

505    503

Fig. 9C

501    506

502

504

503

y

x

z

505

Fig. 10

Fig. 11

Fig. 12

```
┌─────────────────────────────────────────┐
│   Manufacturing first monolithic          │
│      transparent optical part             │ ⌐ 1301
└─────────────────────────────────────────┘
                    │
                    ▼
┌─────────────────────────────────────────┐
│           Applying coating                │ ⌐ 1302
└─────────────────────────────────────────┘
                    │
                    ▼
┌─────────────────────────────────────────┐
│          Applying AR coating              │ ⌐ 1303
└─────────────────────────────────────────┘
                    │
                    ▼
┌─────────────────────────────────────────┐
│   Manufacturing second monolithic         │
│      transparent optical part             │ ⌐ 1304
└─────────────────────────────────────────┘
                    │
                    ▼
┌─────────────────────────────────────────┐
│          Applying AR coating              │ ⌐ 1305
└─────────────────────────────────────────┘
                    │
                    ▼
┌─────────────────────────────────────────┐
│   Assembling the first and second monolithic │
│ transparent optical parts with adhesive material │ ⌐ 1306
└─────────────────────────────────────────┘
```

Fig. 13

1401    +    1402    1403

Fig. 14

1403

1501

503    1500

505

Fig. 15

Fig. 16

Fig. 17

**EP 4 067 974 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8433172 B
- US 9285590 B
- US 8665178 B1
- US 2018374266 A1
- WO 2019151498 A1
- US 9435955 B